# EUROPEAN PATENT APPLICATION

(11) **EP 4 640 752 A1**
(43) Date of publication of application: **29.10.2025**
(21) Application number: 24171649.7
(22) Date of filing: 22.04.2024
(51) Int. Cl.: C08K 3/22, C08L 27/06, C09J 7/24, E04D 5/06

(54) **AN ARTICLE COMPRISING POLYVINYLCHLORIDE AND AN ANTIMONY FREE FLAME RETARDANT**

(71) Applicant: Sika Technology AG, 6340 Baar (CH)
(72) Inventor: HÜBSCHER, Peter, 6012 Obernau (CH); DUHAMEL, Albert J., 02878 Tiverton (US); JIANG, Xiong, 02021 Canton (US); VILLIGER, Matthias, 6055 Alpnach Dorf (CH)
(74) Representative: Sika Patent Attorneys

(57) **Abstract**

The invention is directed to an article for use in roof detailing applications, tunnel applications, flooring applications, automotive applications, or outdoor applications, wherein the article comprises:
a) a polyvinylchloride resin,
b) at least one plasticizer for polyvinylchloride resin,
c) optionally at least one inorganic filler, and
d) at least one antimony free flame retardant.

## Description

### Technical field

The invention relates polyvinylchloride based articles comprising at least one antimony free flame-retardant. The invention also relates use of such articles in roof detailing, tunnel, flooring, automotive, and outdoor applications.

### Background of the invention

Polymer materials are widely used in various applications in construction, automotive, and consumer goods industry. Typical applications of polymers in construction industry include areas such as flooring, windows, cladding, rainwater, pipes, membranes, seals, glazing, insulation, and signage. Waterproofing and roofing membranes are used to protect underground and above ground constructions, such as basements, tunnels, facades, and roofs against penetration of water. These membranes are sheet-like elements that are delivered to a construction site in form of rolls, transferred to the place of installation, unrolled, and adhered to the substrate to be waterproofed. Typically such membranes have a width of at least one meter, especially at least two meters. Commonly used polymers for membranes include thermoplastics, such as plasticized polyvinylchloride (p-PVC), thermoplastic polyolefin elastomers (TPO, TPE-O), and elastomers such as ethylene-propylene diene monomer (EPDM) rubber.

Polymer materials are also commonly used for providing roof detailing articles, which are used, for example, for waterproofing of smaller areas than whole roofs, such as roof edges, parapet walls, expansion joints, and penetrations. Such detailing articling articles are typically provided in form of tapes or patches, which have a comparable thickness but significantly smaller width and/or length than the waterproofing and roofing membranes. Depending on the compatibility of the materials, the detailing articles can be fastened to roof substrates either by using heat welding or adhesive bonding means.

In the automotive industry, polymer material can be found, for example, in dashboards, automotive body parts, bumpers, gas cans, headlight lenses, and steering wheel covers. Prefabricated polymeric articles are also used for covering of floors, particularly residential and office buildings. Such flooring articles are typically provided in form of tiles, sheets, mats, or carpets that are commonly adhered to a floor substrate by using adhesive means. Typical polymers used in flooring covering applications include polyolefins, polyvinylchloride, polycarbonate, and acrylonitrile butadiene styrene.

A significant disadvantage of commonly used polymeric materials is their inherently low fire resistance properties. The limiting oxygen index (LOI) of most polymeric materials is less than 25%, which make them flammable or combustible. Generally, construction products composed of polymeric materials must fulfill certain fire resistance requirements, i.e., to achieve a specific "fire rating classification". The required classification depends on the type of the product. For example, polymeric sheets used in the external façade, such as breather membranes and vapor control layers, have a different fire rating requirement than roofing membranes used for covering a flat roof structure. In Europe, the requirements for fire safety in buildings have been increased after the Grenfell Tower disaster in 2017.

Specific compounds known as "flame retardants" are typically added to polymer compositions to improve their fire resisting/retarding properties to enable their use in various industrial applications. Commonly used flame retardants for polymeric materials include metal hydroxides, halogenated, particularly brominated flame retardants, antimony compounds, especially antimony trioxide, and halogen free flame retardants, such as ammonium polyphosphate and 1,3,5-triazine compounds, such as melamine and melamine salts and adducts, and oligomeric and polymeric 1,3,5-triazine compounds.

Furthermore, heavy metal stabilizers, such as cadmium, barium/zinc, calcium/zinc, and barium/cadmium mixed metal stabilizers are commonly used to improve the heat stability of PVC based articles. Halogenated flame retardants, particularly brominated retardants, and antimony compounds are highly effective in achieving the requirements for fire classification, but their use is generally not preferred for environmental and safety issues. In fact, the use of brominated flame retardants has already been banned in some applications.

There thus remains a need for a new type of PVC based article, which is able to fulfill the requirements for fire resistance without the use of antimony compounds. Preferably, the PVC based article is also free of heavy metal stabilizers.

### Summary of the invention

The object of the present invention is to provide a PVC based article, which solves or at least mitigates the problems of the prior art solutions as discussed above. Particularly, it is object of the present invention to provide a PVC based article for use in construction, automotive, and outdoor applications, which article does not rely on use of antimony compounds to fulfill the requirements of fire resistance.

Surprisingly it has been found out that the objects can be achieved with the features of claim 1.

Specifically, according to the invention, an article for use in roof detailing applications, tunnel applications, flooring applications, automotive applications, or outdoor applications is provided, wherein the article comprises:
a) a polyvinylchloride resin,
b) at least one plasticizer,
c) optionally at least one inorganic filler, and
d) at least one antimony free flame retardant.

As it turned out, the suggested PVC based article containing at least one antimony free flame retardant is suitable for use in construction, automotive, and outdoor applications. Such articles have the inherent advantage of not containing antimony substances, particularly antimony trioxide, which are in many countries considered to be banned for environmental and safety issues.

Additional aspects of the present invention are presented in further independent claims. Preferred embodiments of the invention are outlined throughout the description and the dependent claims.

### Detailed description of the invention

The subject of the present invention is an article for use in roof detailing applications, tunnel applications, flooring applications, automotive applications, or outdoor applications, wherein the article comprises:
a) a polyvinylchloride resin,
b) at least one plasticizer,
c) optionally at least one inorganic filler, and
d) at least one antimony free flame retardant.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1%.

The "amount or content of at least one component X" in a composition, for example "the amount of the at least one plasticizer" refers to the sum of the individual amounts of all plasticizers contained in the composition. Furthermore, in case the composition comprises 20 wt.-% of at least one plasticizer, the sum of the amounts of all plasticizers contained in the composition equals 20 wt.-%.

Suitable PVC resins for use in the article include ones having a K-value determined by using the method as described in ISO 1628-2-1998 standard in the range of 50 - 85, preferably 65 - 75. The K-value is a measure of the polymerization grade of the PVC-resin, and it is determined from the viscosity values of the PVC homopolymer as virgin resin, dissolved in cyclohexanone at 30° C.

In one exemplary embodiment, the article comprises 25 - 65 wt.-%, preferably 30 - 60 wt.-% of the polyvinylchloride resin.

The type of the at least one plasticizer for the polyvinylchloride resin is not particularly restricted in the present invention. Suitable plasticizers for the PVC-resin include but are not restricted to, for example, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

Particularly suitable phthalate-free plasticizers to be used with the PVC resin include alkyl esters of benzoic acid, dialkyl esters of aliphatic dicarboxylic acids, polyesters of aliphatic dicarboxylic acids or of aliphatic di-, tri- and tetrols, the end groups of which are unesterified or have been esterified with monofunctional reagents, trialkyl esters of citric acid, acetylated trialkyl esters of citric acid, glycerol esters, benzoic diesters of mono-, di-, tri-, or polyalkylene glycols, trimethylolpropane esters, dialkyl esters of cyclohexanedicarboxylic acids, dialkyl esters of terephthalic acid, trialkyl esters of trimellitic acid, triaryl esters of phosphoric acid, diaryl alkyl esters of phosphoric acid, trialkyl esters of phosphoric acid, and aryl esters of alkanesulphonic acids.

In one exemplary embodiment, the at least one plasticizer for the PVC resin is selected from the group consisting of phthalates, trimellitate plasticizers, adipic polyesters, and biochemical plasticizers.

In one exemplary embodiment, the article comprises 15 - 50 wt.-%, preferably 20 - 45 wt.-% of the at least one plasticizer for the polyvinylchloride resin.

The article of the present invention further contains at least one antimony free flame retardant.

The term "antimony free" is understood to mean that the flame retardant does not contain any antimony compounds.

In one exemplary embodiment, the at least one antimony free flame retardant is a metal hydroxide, preferably selected from aluminum trihydrate and magnesium hydroxide.

Aluminum trihydrate (Al(OH)₃) and magnesium hydroxide (Mg(OH)₂) and are well known flame retardants. These are commercially available as surface coated and non-coated types. Aluminum trihydrate, also known as the mineral gibbsite (hydrargillite), is available as milled and precipitated types. Magnesium hydroxide is mainly obtained by precipitation from brines and sea water or via hydration of magnesium oxide.

Both surface coated and non-coated versions of aluminum trihydrate and magnesium hydroxide are suitable for use in the article. Suitable as the coating are in particular organic substances, such as silanes and fatty acids, which are physically or chemically applied to the surface of the flame retardant particles by means of a suitable process. Such coating processes are known to a person skilled in the art and suitable coated types of magnesium hydroxide and aluminum trihydrate are commercially available.

Suitable non-coated and surface coated aluminum trihydrate and magnesium hydroxide are commercially available, for example, under the trade names of Martinal^{®} and Magnifin^{®} (both from Martinswerk GmbH).

In one exemplary embodiment, the article comprises 1.5 - 35 wt.-%, preferably 5-30 wt.-% of the at least one antimony free flame retardant.

In one exemplary embodiment, the article further comprises at least one inorganic filler.

Suitable inorganic fillers for use in the article include sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

In one or more embodiments, the at least one inorganic filler is present in the article layer in an amount of 0 - 40 wt.-%, preferably 5 - 35 wt.-%, based on the total weight of the article.

The article can further comprise one or more additives, for example, UV- and heat stabilizers, antioxidants, dyes, pigments such as titanium dioxide and carbon black, matting agents, antistatic agents, impact modifiers, biocides, and processing aids such as lubricants, slip agents, antiblock agents, and denest aids.

It may be preferable that the article comprises less than 0.5 wt.-%, preferably less than 0.1 wt.-%, more preferably less than 0.01 wt.-%, based on the total weight of the article, of antimony compounds.

It may further be preferable that the article comprises less than 0.5 wt.-%, preferably less than 0.1 wt.-%, more preferably less than 0.01 wt.-%, based on the total weight of the article, of metal and mixed metal stabilizers selected from cadmium, barium/zinc, calcium/zinc, and barium/cadmium mixed metal stabilizers.

In one further embodiment, the article comprises less than 0.5 wt.-%, preferably less than 0.1 wt.-%, more preferably less than 0.01 wt.-%, based on the total weight of the article, of heavy metal stabilizers. The term "heavy metal" refers here to those elements of the periodic table having an atomic number greater than 20 and a density of more than 5 g/cm³.

In one exemplary embodiment, the article is an article for use in a roof detailing application, preferably selected from edge detailing, parapet wall detailing, wall detailing, expansion joint detailing, curb detailing, drain detailing, penetration detailing, sleeper detailing, transition detailing, and tie-in detailing applications.

Particularly, such roof detailing articles include flashing strips, cover strips, and flashing membranes. Flashing strips can be used for sealing of different types of joints that are included in a roof system, such as a joint between an edge metal and a roofing membrane, or an expansion joint. Flashing membranes are used for waterproofing smaller surfaces than roofs surfaces, such as parapet walls and pipe penetrations. Cover strips are installed to cover an element, such as a mechanical fastening element, for example, to protect the element from environmental impacts.

In one exemplary embodiment, the article for use in a roof detailing application is a sheet-like element, preferably having a thickness of 0.75 - 2.5 mm, more preferably 1.0 - 2.0 mm, even more preferably 1.0 - 1.5 mm and/or a width of 0.1 - 1.0 m, more preferably 0.15 - 0.85 m, even more preferably 0.2 - 0.75 m.

In another exemplary embodiment, the article is an article for use in a tunnel waterproofing application, preferably a membrane for waterproofing of tunnels.

Waterproofing membranes for tunnels are used to prevent leaks into or out of the tunnel structure and to protect the structure against the harmful influences of aggressive ground- or seawater. Particularly, such waterproofing membranes for tunnels are used for protecting a structure against water from damp soil contact, percolating water groundwater and mountain water under hydrostatic pressure. Waterproofing membranes for tunnels can be provided as single- or double-layer systems and they can be used in combination with waterstop systems or without them to provide a fully waterproofed tunnel structure.

In one exemplary embodiment, the article for use in a tunnel waterproofing application is a membrane for waterproofing of tunnels having a thickness of 1.0 - 3.0 mm, more preferably 1.0 - 2.5 mm, even more preferably 1.0 - 2.0 mm and/or a width of 1.0 - 3.5 m, more preferably 1.5 - 3.0 m, even more preferably 2.0 - 3.0 m.

In another exemplary embodiment, the article is an article for use in a flooring application, preferably selected from floor tiles and floor sheets.

PVC based floor tiles are sheet like elements, typically having a thickness of not more than 10 mm and length and/or width of not more than 2500 mm, especially not more than 2000 mm. They may be provided as interlocking pieces that can be easily arranged to cover a floor.

PVC based floor sheets are used for providing a continuous and seamless flooring covering for larger areas. They are typically provided in form of large rolls and cut to size into sheets during installation and used in large areas like living rooms or commercial spaces like offices and retail stores.

In another exemplary embodiment, the article is an article for use in automotive applications, preferably selected from wire harness, floor modules, dashboard and door panels seatings, arm rests, body side protection strips, weather strips, and window sealing profiles.

In yet another exemplary embodiment, the article is an article for use in an outdoor application, preferably a tarpaulin, especially tarpaulin for use in agriculture, construction, industry, trucks, flood barrier, or in temporary roof repair.

The term "tarpaulin" refers in the context of the present disclosure to a large sheet of waterproof material, often provided in form of a cloth. Tarpaulins can have reinforced grommets at the corners and along the sides to provide attachment points for a rope, allowing them to be tied down or suspended. Truck tarpaulins are typically used to protect the loads of open trucks and wagons. Tarpaulins can be categorized for use in "regular duty", "heavy duty", or "super-heavy duty" applications. PVC based tarpaulins are typically used in heavy-duty applications.

Another aspect of the present invention is a self-adhesive article comprising an article of the present invention and further a pressure sensitive adhesive layer.

The term "pressure sensitive adhesive (PSA)" designates in the present disclosure viscoelastic materials, which adhere immediately to almost any kind of substrates by application of light pressure, and which are permanently tacky. The tackiness of an adhesive layer can be measured, for example, as a loop tack.

In one exemplary embodiment, the pressure sensitive adhesive is selected from acrylic adhesives and synthetic rubber-, natural rubber-, and bitumen-based adhesives.

Suitable rubbers for use in a synthetic rubber-based pressure sensitive adhesive include for example, styrene block copolymers, vinyl ether polymers, styrene-butadiene rubber (SBR), ethylene propylene diene monomer (EPDM), butyl rubber, polyisoprene, polybutadiene, polychloroprene rubber, ethylene-propylene rubber (EPR), nitrile rubber, acrylic rubber, ethylene vinyl acetate rubber, or silicone rubber.

Suitable bitumen-based pressure sensitive adhesives typically comprise one of more different types of bitumen materials mixed with one or more modifying polymers to improve the resistance to UV-radiation, toughness, and flexibility at low temperatures.

Suitable styrene block copolymers for use in the synthetic rubber-based adhesive include styrene block copolymers of the SXS type, in each of which S denotes a non-elastomer styrene (or polystyrene) block and X denotes an elastomeric α-olefin block, which may be polybutadiene, polyisoprene, polyisoprene-polybutadiene, completely or partially hydrogenated polyisoprene (poly ethylene-propylene), or completely or partially hydrogenated polybutadiene (poly ethylene-butylene). The elastomeric α-olefin block preferably has a glass transition temperature in the range from -55 °C to -35 °C. The elastomeric α-olefin block may also be a chemically modified α-olefin block. Particularly suitable chemically modified α-olefin blocks include, for example, maleic acid-grafted α-olefin blocks and particularly maleic acid-grafted ethylene-butylene blocks.

Especially suitable styrene block copolymers include block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, wherein the linear structure may be preferred.

In addition to the above-mentioned constituents, suitable pressure sensitive adhesives typically comprise one or more additional constituents including, for example, tackifying resins, waxes, and additives, for example, UV-light absorption agents, UV- and heat stabilizers, optical brighteners, pigments, dyes, and desiccants.

In one exemplary embodiment, the pressure sensitive adhesive layer is an acrylic pressure sensitive adhesive layer, preferably comprising at least 35 wt.-%, preferably at least 50 wt.-% of at least one acrylic polymer **AP.**

The term "acrylic polymer" designates in the present disclosure homopolymers, copolymers and higher inter-polymers of an acrylic monomer with one or more further acrylic monomers and/or with one or more other ethylenically unsaturated monomers.

The term "monomer" refers to a compound that chemically bonds to other molecules, including other monomers, to form a polymer. The term "acrylic monomer" refers to monomers having at least one (meth)acryloyl group in the molecule. The term "(meth)acryloyl" designates methacryloyl or acryloyl. Accordingly, the term "(meth)acrylic" designates methacrylic or acrylic. A (meth)acryloyl group is also known as (meth)acryl group.

The polymer chains of the acrylic polymers contained in the pressure sensitive adhesive layer may be non-crosslinked or physically or chemically crosslinked. Furthermore, the polymer chains of the acrylic polymers may be present in the pressure sensitive adhesive layer as part of a chemically crosslinked polymer network comprising other polymers than acrylic polymers or as part of an interpenetrating or semi-interpenetrating polymer network (IPN).

The term "interpenetrating polymer network" refers to a polymer network comprising two or more dissimilar polymers that are in network form, i.e., chemically, or physically crosslinked. In an IPN, the polymer chains are not chemically bonded, but they are physically entangled by permanent chain entanglements. In a semi-interpenetrating polymer network, the polymer network and a linear or branched polymer penetrate each other at the molecular level.

The advantage of using an acrylic pressure sensitive adhesive layer in the adhesive element may be that acrylic PSAs have been found out to suppress or even completely prevent the migration of plasticizers from the polyvinylchloride based article to the adhesive layer. The migration of plasticizers would normally increase the risk of deterioration of adhesive properties and delamination of the adhered article from a surface of a substrate.

In one exemplary embodiment, the pressure sensitive adhesive layer comprises at least 50 wt.-%, preferably at least 75 wt.-%, more preferably at least 85 wt.-%, even more preferably at least 90 wt.-%, based on the total weight of the adhesive layer, of the at least one acrylic polymer AP.

Examples of suitable acrylic monomers for use in the at least one acrylic polymer **AP** include, for example, (meth)acrylates, (meth)acrylic acid or derivatives thereof, for example, amides of (meth)acrylic acid or nitriles of (meth)acrylic acid, and (meth)acrylates with functional groups such as hydroxyl group-containing (meth)acrylates and alkyl (meth)acrylates.

It may be preferred that the acrylic polymer **AP** has been obtained from a monomer mixture comprising at least 45 wt.-%, preferably at least 55 wt.-%, more preferably at least 65 wt.-%, even more preferably at least 75 wt.-%, still more preferably at least 85 wt.-%, based on the total weight of the monomer mixture, of at least one acrylic monomer **AM** of formula (I): 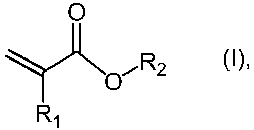 where
R₁ represents a hydrogen or a methyl group; and
R₂ represents a branched, unbranched, cyclic, acyclic, or saturated alkyl group having from 2 to 30 carbon atoms.

Examples of suitable acrylic monomers of formula (I) include methyl acrylate, methyl methacrylate, ethyl acrylate, ethoxy ethoxy ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

Suitable comonomers to be used with the acrylic monomers of formula (I) include, for example, hydroxyl group containing acrylic monomers, such as 2-hydroxyethyl(meth)acrylate, 2-hydroxypropyl(meth)acrylate, 3-hydroxypropyl (meth)acrylate, 2-hydroxybutyl(meth)acrylate, 4-hydroxybutyl butyl(meth)acrylate, 2-hydroxy-hexyl(meth)acrylate, 6-hydroxy hexyl(meth) acrylate, 8-hydroxyoctyl(meth)acrylate, 10-hydroxydecyl (meth)acrylate, 12-hydroxylauryl(meth)acrylate. Further suitable hydroxyl group containing acrylic monomers include (4-hydroxymethyl cyclohexyl)methyl acrylate, polypropylene glycol mono (meth)acrylate, N- hydroxyethyl (meth)acrylamide, and N- hydroxypropyl (meth)acrylamide, esters of hydroxyethyl(meth)acrylate and phosphoric acid, and trimethoxysilylpropyl methacrylate.

In one exemplary embodiment, the monomer mixture used for obtaining the at least one acrylic polymer **AP** comprises not more than 25 wt.-%, preferably not more than 20 wt.-%, such as 0.01 - 15 wt.-%, preferably 0.1 - 10 wt.-%, based on the total weight of the monomer mixture, of at least one hydroxyl group containing acrylic monomer.

Further suitable comonomers for the synthesis of the at least one acrylic polymer **AP** include vinyl compounds, such as ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid. Examples of especially suitable vinyl compounds include, for example, maleic anhydride, styrene, styrenic compounds, acrylic acid, beta-acryloyloxypropionic acid, vinylacetic acid, fumaric acid, crotonic acid, aconitic acid, trichloroacrylic acid, itaconic acid, vinyl acetate, and acryloyl morpholine.

In one exemplary embodiment, the monomer mixture used for obtaining the at least one acrylic polymer **AP** comprises at least 0.1 wt.-%, preferably at least 0.5 wt.-%, such as 0.1 - 20 wt.-%, preferably 0.5 - 15 wt.%, based on the total weight of the monomer mixture, of at least one vinyl compound, preferably selected from the group consisting of maleic anhydride, styrene, styrenic compounds, (meth)acrylamides, N-substituted (meth)acrylamides, acrylic acid, beta-acryloyloxypropionic acid, vinylacetic acid, fumaric acid, crotonic acid, aconitic acid, dimethylacrylic acid, trichloroacrylic acid, itaconic acid, vinyl acetate, and amino group-containing (meth)acrylates.

The at least one acrylic polymer **AP** may have a glass transition temperature (T_{g}), determined by dynamical mechanical analysis (DMA) using an applied frequency of 1 Hz and a strain level of 0.1 %, of below 0 °C, preferably below - 20 °C and/or a number average molecular weight (Mₙ) determined by gel permeation chromatography using polystyrene as standard of 50000 - 1000000 g/mol, preferably 100000 - 750000 g/mol, more preferably 150000 - 500000 g/mol.

In one exemplary embodiment, the pressure sensitive adhesive layer is a dried layer of a water- or solvent-based acrylic pressure sensitive adhesive composition or a cured layer of an actinic radiation or electron beam curable acrylic pressure sensitive adhesive composition. The term "dried layer" is understood to mean a layer of the adhesive composition comprising not more than 10 wt.-%, particularly not more than 5 wt.-%, especially not more than 2.5 wt.-%, of water or organic solvents, respectively.

The term "actinic radiation" refers here to electromagnetic radiation that is capable of initiating photochemical reactions with wavelengths ranging from the ultraviolet light range through the visible light range and into the infrared range.

The term "water-based pressure sensitive adhesive composition" designates in the present disclosure pressure sensitive adhesives, which have been formulated as an aqueous dispersion, an aqueous emulsion, or as an aqueous colloidal suspension. The term "aqueous dispersion" or "aqueous emulsion" refers to dispersions or emulsions containing water as the main continuous (carrier) phase. Typically, a water-based pressure sensitive adhesive composition comprises surfactants to stabilize the hydrophobic polymer particles and to prevent these from coagulating with each other. The term "solvent-based pressure sensitive adhesive composition" designates in the present disclosure pressure sensitive adhesives comprising acrylic polymers, which are substantially completely dissolved in the organic solvent(s). Typically, the organic solvent(s) comprise at least 20 wt.-%, preferably at least 30 wt.-%, more preferably at least 40 wt.-%, of the total weight of the solvent-based pressure sensitive adhesive composition. The term "organic solvent" refers in the present document to organic substances that are liquid at a temperature of 25 °C, are able to dissolve another substance at least partially, and have a standard boiling point of not more than 225°C, preferably not more than 200 °C. The term "standard boiling point" refers in the present disclosure to boiling point measured at a pressure of 1 bar. The standard boiling point of a substance or composition can be determined, for example, by using an ebulliometer.

Suitable organic solvents for the solvent-based pressure sensitive adhesive composition include, for example, alcohols, aliphatic and aromatic hydrocarbons, ketones, esters, and mixtures thereof. It is possible to use only a single organic solvent or a mixture of two or more organic solvents. Suitable solvent-based pressure sensitive adhesive compositions are substantially water-free, for example, containing less than 10 wt.-%, preferably less than 5 wt.-%, more preferably less than 1 wt.-% of water, based on the total weight of the solvent-based pressure sensitive adhesive.

The term "actinic radiation-curable acrylic pressure sensitive adhesive composition" refers to acrylic pressure sensitive adhesives, which can be cured by initiation of photochemical curing reactions by actinic irradiation. In analogy, the term "electron beam curable acrylic pressure sensitive adhesive composition" refers to acrylic pressure sensitive adhesives, which can be cured by initiation of photochemical curing reactions by accelerated electrons. The term "curing" in the present disclosure to chemical reactions comprising forming of bonds resulting, for example, in chain extension and/or crosslinking of polymer chains.

Suitable water- or solvent-based acrylic pressure sensitive adhesive compositions may, for example, comprise:
A1) 25 - 85 wt.-%, preferably 35 - 75 wt.-%, of the at least one acrylic polymer **AP** and
B1) 5 - 85 wt.-%, preferably 10 - 75 wt.-%, of water or at least one organic solvent, all proportions being based on the total weight of the water- or solvent-based acrylic pressure sensitive adhesive composition.

In addition to the at least one acrylic polymer **AP,** the water- or solvent-based acrylic pressure sensitive adhesive composition may further comprise one or more additional constituents including, for example, tackifying resins, waxes, and plasticizers as well as one or more additives, such as UV-light absorption agents, UV- and heat stabilizers, optical brighteners, pigments, dyes, and desiccants. Preferably, the total amount of such additional constituents and additives is not more than 35 wt.-%, more preferably not more than 25 wt.-%, most preferably not more than 15 wt.-%, based on the total weight of the water- or solvent-based acrylic pressure sensitive adhesive composition.

Suitable actinic radiation- curable acrylic pressure sensitive adhesive compositions include UV- and visible light- curable acrylic pressure sensitive adhesive compositions, such as UV- and visible light- curable acrylic hot-melt pressure sensitive adhesive compositions, which may comprise:
A2) At least 65 wt.-%, preferably at least 85 wt.-%, of at least one UV- or visible light curable acrylic polymer **UV-AP** having one or more photo initiator groups,
B2) 0 - 15 wt.-%, preferably 0.1 - 10 wt.-%, of at least one reactive diluent, and
C2) 0 - 20 wt.-%, preferably 1 - 15 wt.-%, of the at least one filler **F,** all proportions being based on the total weight of the UV- or visible light curable acrylic hot-melt pressure sensitive adhesive composition.

The at least one acrylic polymer **UV-AP** comprises polymerized units that serve as photoinitiators. Suitable polymerized units that serve as photo initiators may be obtained by using copolymerizable photo initiators, such as acetophenone and benzophenone derivatives.

The at least one acrylic polymer **UV-AP** may comprise 0.05 - 10 wt.-%, preferably 0.1 - 5 wt.-%, more preferably 0.1 - 1.5 wt.-%, based on the weight of the acrylic polymer **UV-AP,** of at least one ethylenically unsaturated compound having a photo initiator group.

Suitable compounds for use as the filler **F** include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

Preferably, the at least one filler **F** has a median particle size d₅₀ of not more than 150 µm, more preferably not more than 100 µm. According to one or more embodiments, the at least one filler **F** has a median particle size d₅₀ of 0.1 - 100 µm, preferably 0.15 - 50 µm, more preferably 0.15 - 25 µm, even more preferably 0.25 - 15 µm.

The term "particle size" refers in the present disclosure to the area-equivalent spherical diameter of a particle (Xₐᵣₑₐ). The term "median particle size d₅₀" refers to a particle size below which 50 % of all particles by volume are smaller than the d₅₀ value. In analogy, the term d₉₀ particle size refers in the present disclosure to a particle size below which 90 % of all particles by volume are smaller than the d₉₀ value and term "d₁₀ particle size" refers to a particle size below which 10 % of all particles by volume are smaller than the d₁₀ value. A particle size distribution can be measured by laser diffraction according to the method as described in standard ISO 13320:2009 using a wet or dry dispersion method and for example, a Mastersizer 2000 device (trademark of Malvern Instruments Ltd, GB).

Suitable UV-curable acrylic hot-melt pressure sensitive adhesive compositions are commercially available, for example, under the trade name of acResin^{®} (from BASF); under the trade name of AroCure^{®} (form Ashland Chemical); and under the trade name of NovaMeltRC^{®} (from Henkel).

Further suitable UV- and visible light curable acrylic pressure sensitive adhesives compositions include UV- and visible light- curable acrylic hot-melt pressure sensitive adhesive compositions comprising:
A3) at least 65 wt.-%, preferably at least 75 wt.-%, of the at least acrylic polymer **AP,**
B3) 0 - 30 wt.-%, preferably 5-20 wt.-%, of at least one tackifying resin **TR,**
C3) 0 - 5 wt.-%, preferably 0.01 - 1 wt.-%, of at least one cross-linking agent **CA,**
D3) 0.1 - 5 wt.-%, preferably 0.25 - 2.5 wt.-%, of at least one photoinitiator **PI,** all proportions being based on the total weight of the UV- and visible light- curable acrylic hot-melt pressure sensitive adhesive composition.

The term "tackifying resin" designates in the present disclosure resins that in general enhance the adhesion and/or tackiness of an adhesive composition. The term "tackiness" designates in the present disclosure the property of a substance of being sticky or adhesive by simple contact. The tackiness can be measured, for example, as a loop tack. Preferred tackifying resins are tackifying at a temperature of 25 °C or below.

Examples of suitable compounds to be used as the at least one tackifying resin **TR** include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, Cs, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1,3-hexadiene, 1,4-hexadiene, cyclopentadiene, dicyclopentadiene, and terpenes. Aromatic monomer can include Cs, C₉, and C₁₀ aromatic monomer. Examples of aromatic monomer include styrene, indene, derivatives of styrene, derivatives of indene, coumarone, and combinations thereof.

Particularly suitable synthetic resins include synthetic hydrocarbon resins made by polymerizing mixtures of unsaturated monomers that are obtained as by-products of cracking of natural gas liquids, gas oil, or petroleum naphthas. Synthetic hydrocarbon resins obtained from petroleum-based feedstocks are referred in the present disclosure as "hydrocarbon resins" or "petroleum hydrocarbon resins". These include also pure monomer aromatic resins, which are made by polymerizing aromatic monomer feedstocks that have been purified to eliminate color causing contaminants and to precisely control the composition of the product. Hydrocarbon resins typically have a relatively low average molecular weight (Mₙ), such in the range of 250 - 5000 g/mol and a glass transition temperature, determined by dynamical mechanical analysis (DMA) as the peak of the measured loss modulus (G") curve using an applied frequency of 1 Hz and a strain level of 0.1 %, of above 0 °C, preferably equal to or higher than 15 °C, more preferably equal to or higher than 30 °C.

Examples of suitable hydrocarbon resins include C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from Rain Carbon); and under the trade name of Kristalex^{®}, Plastolyn^{®}, Piccotex^{®}, Piccolastic^{®} and Endex^{®} (all from Eastman Chemicals).

According to one or more embodiments, the at least one tackifying resin **TR** has:
- a softening point measured by a Ring and Ball method according to DIN EN 1238 standard in the range of 65 - 200 °C, preferably 75 - 175 °C, more preferably 80 - 170 °C and/or
- an average molecular weight (Mₙ) in the range of 150 - 5000 g/mol, preferably 250 - 3500 g/mol, more preferably 250 - 2500 g/mol and/or
- a glass transition temperature (T_{g}) determined by dynamical mechanical analysis (DMA) as the peak of the measured loss modulus (G") curve using an applied frequency of 1 Hz and a strain level of 0.1 % of at or above 0 °C, preferably at or above 15 °C, more preferably at or above 25 °C, even more preferably at or above 30 °C, still more preferably at or above 35 °C.

Suitable cross-linking agents **CA** include multifunctional acrylates such as selected from the group consisting of butanediol di(meth)acrylate, ethyleneglycol di(meth)acrylate, diethyleneglycol di(meth)acrylate, triethyleneglycol di(meth)acrylate, trimethylolpropane trimethacrylate, hexanediol diacrylate, trimethylolpropane triacrylate, and tripropyleneglycol diacrylate, trimethylolpropane ethoxy triacrylate, trimethylolpropane triacrylate, tripropylene glycol diacrylate, propylene glycol di(meth)acrylate, dipropylene glycol diacrylate, dipentaerythritol hydroxy pentaacrylate, neopentyl glycol propoxylate diacrylate, bisphenol A ethoxylate di(meth)acrylate, alkoxylated hexanediol diacrylate, ethoxylated bisphenol A diacrylate, ethoxylated bisphenol A di(meth)acrylate, ethoxylated trimethylolpropane triacrylate, propoxylated neopentyl glycol diacrylate, propoxylated glyceryl triacrylate, and polybutadiene di(meth)acrylate.

Suitable compounds for use as the at least one photoinitiator **PI** include free radical photo initiators and cationic photo initiators, especially free radical photo initiators. Suitable compounds for use as photoinitiators include, for example, benzoic ethers, dialkoxyacetophenones, alpha-hydroxycyclohexyl aryl ketones, alpha-ketophenylacetate esters, benzyldialkylketals, chloro- and alkylthioxanthones and alpha-amino- and alpha-hydroxyalkyl aryl ketones.

Selection of the type of the at least one photoinitiator depends mainly on the wavelength of the electromagnetic radiation used for curing of the adhesive.

Suitable photoinitiators showing absorption in the UVA-1 irradiation wavelength range include so called Norrish type I initiators as well as some Norrish type II initiators.

Especially suitable Norrish type I photoinitiators include phospine oxides (PO), such as diphenyl(2,4,6-trimethylbenzoyl)phosphine oxide (TPO), ethyl phenyl(2,4,6-trimethylbenzoyl) phosphinate (TPO-L), phenylbis(2,4,6-trimethylbenzoyl)phosphine oxide (BAPO), bis-(2,6-dimethoxybenzoyl)-2,4,4-trimethylpentylphosphine oxide (BAPO-1), 2-benzyl-2-(dimethylamino)-4-morpholino-butyrophenone (BDMB), and phenyl-bis-(2,4,6-trimethylbenzoyl) phosphine oxide (BAPO-2). These are commercially available, for example, under the trade name of Omnirad (from IGM Resins), Genocure (from Rahn AG), Speedcure (from Lambson (part of Arkema), Songcure (from Songwon), and Photoinitiators from Bodo Möller Chemie.

Suitable Norrish type II photoinitiators include thiozanthones (TX), for example, 2-Isopropylthioxanthone (ITX), thioxanthone-anthracene (TX-A), 2,4-diethylthioxanthone (DETX), 2-Chlorothioxanthone (CTX), 2,4-Dimethylthioxanthone (RTX), 2,4-diisopropylthioxanthone (DITX), 1-Chloro-4-propoxythioxanthone (CPTX); polymeric TXs such as polymeric CPTX, polyTHF-di(thioxanthone-2-oxyacetate); and dl-camphorquinine 2,3-bornanedione (CQ). These are commercially available, for example, under the trade names of Genocure^{®} (from Rahn GmbH), Omnirad^{®} (from IGM resins), and SpeedCure^{®} (from Lambson).

Furthermore, the photoinitiators may be used in combination with synergists /activators that are well known to skilled person. The preferred type of the synergist depends on the type of the photoinitiator, for example the radical formation with Norrish type II initiators requires a hydrogen donor as a synergist. Examples of suitable synergists for the Norrish II initiators include, for example, amino benzoates, acrylated amines, and thiol compounds.

Still further examples of UV- and visible light- curable acrylic pressure sensitive adhesive compositions include UV- and visible light- curable acrylic syrup pressure sensitive adhesive compositions comprising:
A4) at least 35 wt.-%, preferably at least 50 wt.-%, of the at least acrylic monomer **AM,**
B4) 0-30 wt.-%, preferably 5-20 wt.-%, of the at least one tackifying resin **TR,**
C4) 0 - 5 wt.-%, preferably 0.01 - 1 wt.-%, of the at least one cross-linking agent **CA,** and
D4) 0.1 - 5 wt.-%, preferably 0.25 - 2.5 wt.-%, of the at least one photoinitiator PI, all proportions being based on the total weight of the UV- or visible light- curable acrylic syrup pressure sensitive adhesive composition.

The self-adhesive article may further comprise a release liner covering the exterior surface of the pressure sensitive adhesive layer facing away from the article.

The release liner may be used to prevent premature unwanted adhesion and to protect the pressure sensitive adhesive layer from moisture, fouling, and other environmental factors. The release liner may be sliced into multiple sections to allow portioned detachment of the liner from the adhesive layer.

Suitable materials for the release liner include Kraft paper, polyethylene coated paper, silicone coated paper as well as polymeric films, for example, polyethylene, polypropylene, and polyester films coated with polymeric release agents selected from silicone, silicone urea, urethanes, waxes, and long chain alkyl acrylate release agents.

In one exemplary embodiment, the pressure sensitive adhesive layer has a mass per unit area of 25 - 500 g/m², preferably 50 - 500 g/m², more preferably 100 - 350 g/m².

Another aspect of the present invention is a method for detailing a roof substrate comprising steps of:
- Providing an article for use in roof detailing applications according to the present invention or a self-adhesive article for use in roof detailing applications according to the present invention and
- Adhering the article or the self-adhesive article to a surface of a roof substrate by using heat welding or adhesive bonding means.

## Claims

1. An article for use in roof detailing applications, tunnel applications, flooring applications, automotive applications, or outdoor applications, wherein the article comprises:
a) a polyvinylchloride resin,
b) at least one plasticizer for polyvinylchloride resin,
c) optionally at least one inorganic filler, and
d) at least one antimony free flame retardant.

2. The article according to claim 1, wherein the at least one antimony free flame retardant is selected from aluminum trihydrate and magnesium hydroxide.

3. The article according to claim 1 or 2 comprising 1.5 - 35 wt.-%, preferably 5 - 30 wt.-% of the at least one antimony free flame retardant.

4. The article according to any one of previous claims comprising:
a) 25 - 65 wt.-% of the polyvinylchloride resin,
b) 15 - 50 wt.-% of the at least one plasticizer,
c) 0 - 50 wt.-% of the at least one inorganic filler, and
d) 1.5 - 35 wt.-% of the at least one antimony free flame retardant.

5. The article according to any one of previous claims comprising less than 0.1 wt.-%, preferably less than 0.01 wt.-% of antimony compounds.

6. The article according to any one of previous claims comprising less than 0.1 wt.-%, preferably less than 0.01 wt.-% of metal and mixed metal stabilizers selected from cadmium, barium/zinc, calcium/zinc, and barium/cadmium mixed metal stabilizers.

7. The article according to any one of previous claims, wherein the article for use in a roof detailing application is selected from edge detailing, parapet wall detailing, wall detailing, expansion joint detailing, curb detailing, drain detailing, penetration detailing, sleeper detailing, transition detailing, and tie-in detailing applications.

8. The article according to any one of previous claims, wherein the article for use in roof detailing application is a sheet-like element, preferably having a thickness of 0.75 - 2.0 mm, preferably 1.0 - 1.5 mm and/or a width of 0.1 - 1.0 m, preferably 0.15 - 0.75 m.

9. The article according to any one of previous claims, wherein the article for use in a tunnel waterproofing application is a membrane for waterproofing of tunnels.

10. The article according to any one of previous claims, wherein the article for use in flooring applications is selected from floor tiles and floor sheets.

11. The article according to any one of previous claims, wherein the article for use in automotive applications is selected from wire harness, floor module, dashboard and door panels seating, arm rests, body side protection strips, weather strips, and window sealing profiles.

12. The article according to any one of previous claims, wherein the article for use in outdoor applications is a tarpaulin, preferably for use in agriculture, construction, industry, trucks, flood barrier, or in temporary roof repair.

13. A self-adhesive article comprising an article according to any one of previous claims and further a pressure sensitive adhesive layer, preferably selected from acrylic adhesives and synthetic rubber-, natural rubber-, and bitumen-based adhesives.

14. The self-adhesive article according to claim 13, wherein the pressure sensitive adhesive layer is an acrylic pressure sensitive adhesive layer, preferably comprising at least 35 wt.-%, preferably at least 50 wt.-% of at least one acrylic polymer **AP.**

15. A method for detailing a roof substrate comprising steps of:
- Providing an article for use in roof detailing applications as defined in any one of claims 1-12 or a self-adhesive article for use in roof detailing applications as defined in any one of claims 13-14 and
- Adhering the article or the self-adhesive article to a surface of a roof substrate by using heat welding or adhesive bonding means.
